# EUROPÄISCHE PATENTSCHRIFT

(11) **EP 0 687 959 B1**
(45) Veröffentlichungstag und Bekanntmachung des Hinweises auf die Patenterteilung: **10.10.2001**
(21) Anmeldenummer: 95106355.1
(22) Anmeldetag: 27.04.1995
(51) Int. Cl.: G03G 9/097, G03G 9/087, C09D 5/03, C09D 167/00, H01G 7/02

(54) **Verwendung ringförmig verknüpfter Oligo- oder Polysaccharide als Ladungssteuermittel**
Use of cyclic oligosaccharides or polysaccharides as charge control agents
Utilisation d'oligosaccharides et polysaccharides cycliques comme agent de contrôle de charge

(30) Priorität: 30.05.1994 DE 4418842
(43) Veröffentlichungstag der Anmeldung: 20.12.1995
(73) Patentinhaber: Clariant GmbH, 65929 Frankfurt am Main (DE)
(72) Erfinder: Baur, Rüdiger, Dr., D-65817 Eppstein (DE); Macholdt, Hans-Tobias, Dr., D-64297 Darmstadt (DE)

(56) Entgegenhaltungen:
- EP-A- 0 640 883
- PATENT ABSTRACTS OF JAPAN vol. 18 no. 412 (P-1780) ,2.August 1994 & JP-A-06 124002 (MITSUBISHI) 6.Mai 1994,
- PATENT ABSTRACTS OF JAPAN vol. 18 no. 405 (P-1778) ,28.Juli 1994 & JP-A-06 118719 (HITACHI) 28.April 1994,
- DATABASE WPI Week 9335 Derwent Publications Ltd., London, GB; AN 93-278344[35] & JP-A-05 194 711 (KURITA WATER) , 3.August 1993

## Beschreibung

Die vorliegende Erfindung liegt auf dem technischen Gebiet der Ladungssteuermittel in Pulvern und Pulverlacken zur Oberflächenbeschichtung und, in Elektretmaterialien, insbesondere in Elektretfasern,

Ladungssteuermittel können zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Gegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:
a) Beim Corona-Verfahren wird der Pulverlack oder das Pulver an einer geladenen Corona vorbeigeführt und hierbei aufgeladen,
b) beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Auch eine Kombination von beiden Verfahren ist möglich. Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.

Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüberhinaus ist gefunden worden, daß Ladungssteuermittel das Aufladungssowie das Ladungsstabilitätsverhalten von Elektretmaterialien, insbesondere Elektretfasern, erheblich verbessern können (DE-A-43 21 289). Elektretfasern sind bisher hauptsächlich im Zusammenhang mit dem Problem der Feinststaubfiltration beschrieben worden (z.B. von Biermann, "Evaluation of permanently charged electrofibrous filters", 17. DOE Nuclear Air Cleaning Conference, Denver, USA, (1982) sowie in Chemiefasern/Textilindustrie 40/92, (1990/9)). Die beschriebenen Filtermaterialien unterscheiden sich sowohl hinsichtlich der Materialien, aus denen die Fasern bestehen als auch bezüglich der Art und Weise, wie die elektrostatische Ladung auf die Fasern aufgebracht wird. Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung auf unterschiedliche Weise erhalten, nämlich durch Corona- oder Triboaufladung.

Ladungssteuermittel sind in der Literatur zahlreich bekannt. Allerdings weisen die bisher bekannten Ladungssteuermittel eine Reihe von Nachteilen auf, die den Einsatz in der Praxis stark einschränken oder gar unmöglich machen. So können Ladungssteuermittel, wie die in US-PS 4 656 112 beschriebenen Schwermetallkomplexe, oder die in EP-A-0 469 544 beschriebenen Azine und Nigrosine wegen ihrer Eigenfarbe in weißen oder bunten Pulverlacken nicht eingesetzt werden.

Farblose Ladungssteuermittel auf Ammonium- und Immoniumbasis sind oft empfindlich gegen Licht oder mechanische Einwirkungen (US-PS 4 683 188) und thermisch labil, so daß sie Zersetzungsprodukte bilden, die sich nachteilig auf die triboelektrische Aufladung auswirken können (US-PS 4 684 596) und/oder eine starke, oft dunkelbraune, Eigenfarbe aufweisen. Darüberhinaus sind sie oft wachsartig, zum Teil wasserlöslich und/oder besitzen geringe Wirksamkeit als Ladungssteuermittel.

An sich geeignete Ladungssteuermittel auf Basis hochgradig fluorierter Ammonium- und Immoniumverbindungen (US-PS 5 069 994) haben den Nachteil einer aufwendigen Synthese, wodurch hohe Herstellungskosten für die entsprechenden Substanzen anfallen, und sind nicht ausreichend thermostabil.

Ladungssteuermittel auf Basis polymerer Ammoniumverbindungen (DE-A-4 029 653) führen zum Teil zu Amingeruch und die Ladungskontrolleigenschaften dieser Substanzen können sich relativ leicht durch Oxidation und Feuchtigkeitsaufnahme ändern. Des weiteren sind die Oxidationsprodukte gefärbt und daher störend vor allem in Farbtonern. Die vorstehend genannten Ladungssteuermittel für elektrophotographische Toner und Entwickler sind aufgrund ihrer Farbigkeit sowie ihrer mangelnden Thermostabilität für den Einsatz in den überwiegend weißen oder klaren triboelektrisch oder elektrokinetisch versprühten Pulvern und Pulverlacken nicht geeignet. Des weiteren schränkt mangelnde Thermostabilität den Einsatz derartiger Ladungssteuermittel stark ein, da Pulverlacke beispielsweise bei über 200°C 15 Minuten lang eingebrannt werden. Die in US-PS 5 069 994 beanspruchten Ladungssteuermittel für Pulver und Pulverlacke sind aufgrund von Wachsartigkeit und Wasserlöslichkeit oder Hygroskopie schlecht zu handhaben und nur eingeschränkt anwendbar.

Die in EP-A-0 367 162 und in EP-A-0 476 647 beschriebenen Ammoniumverbindungen haben den Nachteil einer zu geringen Thermostabilität, der Unverträglichkeit mit speziellen Polyesterharzsystemen, sowie den des hohen Preises.

Ammoniumsalze auf Basis von Sulfoisophthalsäure und deren Derivate, wie z.B. in US-PS 4 789 614 beschrieben, haben wiederum den Nachteil einer geringen Stabilität in üblichen Bindemittelsystemen. So zeigen sie, 1 %ig in ein typisches Tonerbindemittel (Styrolacrylat oder Polyester) eingearbeitet, schon bei niedrigen Temperaturen (120 bis 140°C) bereits nach wenigen Minuten eine deutliche Vergilbung, was ihren Praxiseinsatz unmöglich macht.

Die in DE-A-4 037 518 beanspruchten Sulfoisophthalsäureharze haben den Nachteil, nur dann eine ausgeprägte Wirkung zu zeigen, wenn sie als dominierende Trägerkomponente eingesetzt werden, und führen dann zu Systemen mit einer oftmals unstabilen negativen Aufladung. Zur Erzielung einer Ladungsstabilität oder um gar eine positive Aufladung einzustellen, muß dem Bindemittel zusätzliches Ladungssteuermittel zugesetzt werden.

Die Japanische Patentanmeldung 6-124 002 beschreibt positiv aufladbare elektrophotographische Toner, die unsubstituierte, alkylierte oder acylierte Cyclooligosaccharide enthalten, um sinkende Kopierqualitäten im Dauerbetrieb zu vermeiden.

Die Japanische Patentanmeldung 6-118 719 beschreibt partiell tosylierte Cyclodextrine für die Verwendung in elektrophotographischen Tonern.

Die Aufgabe der vorliegenden Erfindung war es daher, verbesserte, besonders wirksame farblose Ladungssteuermittel zu finden. Neben dem schnellen Erreichen und der Konstanz der Aufladung sollen die Verbindungen eine hohe Thermostabilität (Zersetzungstemperatur > 200°C) aufweisen.

Darüberhinaus sollten sie öko/toxikologisch unbedenklich, d.h. ungiftig sowie schwermetallfrei sein. Ebenso sollten sie in gängigen Pulverlack-Bindemitteln und Elektretmaterialien wie z.B. Polyethylenstyrol (PES), Epoxid-PES-Epoxyhybrid, Polyurethan sowie Acrylsystemen gut und unzersetzt dispergierbar sein und zu keiner Verfärbung der Harze führen.

Überraschenderweise hat es sich nun gezeigt, daß aus der Vielzahl bekannter Zucker-Verbindungen bestimmte ringförmige Oligosaccharide, substituiert oder unsubstituiert, besonders gute Ladungssteuereigenschaften und hohe Thermostabilität besitzen. Darüberhinaus sind diese Verbindungen ohne Eigenfarbe und lassen sich hervorragend in unterschiedlichen Pulverlackund Elektretbindemitteln dispergieren. Darüberhinaus sind sie schwermetallfrei und toxikologisch, soweit bekannt, unproblematisch.

Aus der großen Zahl der Zucker-Derivate (Saccharide) bestehend aus einer Vielzahl von Mono-, Di- und Tri-Sacchariden, offenkettigen und cyclischen Oligosacchariden, Polysacchariden, wie Xanthanen, um nur einige zu nennen, zeigt die kleine Gruppe der ringförmig verknüpften Oligo- und Polysaccharide, und hierbei insbesondere die aus Glukoseeinheiten bestehenden, im Gegensatz zu den meisten anderen Zucker-Derivaten, die häufig klebrig oder leicht zersetzlich sind, mehrheitlich kristallines Verhalten, vorteilhafte Rieselfähigkeit und gute Thermostabilität.

Gegenstand der vorliegenden Erfindung ist die Verwendung von ringförmig verknüpften Oligo- oder Polysacchariden der Formel (I) 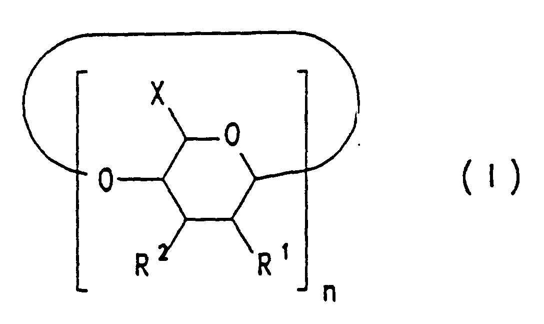 worin
- n: eine Zahl von 6 bis 80, besonders bevorzugt 6 bis 60,
- R¹ und R²: unabhängig voneinander gleich oder verschieden sind und die Bedeutung Hydroxy; verzweigtes oder unverzweigtes, cyclisches oder offenkettiges C₁-C₃₀-Alkoxy; verzweigtes oder unverzweigtes, cyclisches oder offenkettiges C₂-C₃₀-Alkenoxy, vorzugsweise Vinyloxy oder Allyloxy, wobei die genannten Alkoxy- und Alkenoxy-Reste teilweise oder vollständig fluoriert sein können; unsubstituiertes -O-Aryl(C₆-C₃₀). vorzugsweise -O-phenyl, mit 1 bis 5 C₁-C₃₀-Alkylresten oder C₁-C₃₀-Alkoxyresten substituiertes -O-Aryl(C₆-C₃₀); -O-(C₁-C₄)-Alkyl-(C₆-C₃₀)aryl; -O-(Alkylen(C₀-C₃₀)-Y-Alkyl(C₁-C₃₀))ₓ, -O-(Aryl(C₆-C₃₀)-Y-Aryl(C₆-C₃₀))ₓ, -O-(Aryl(C₆-C₃₀)-Y-Alkyl(C₁-C₃₀))ₓ, -O-(Alkylen(C₀-C₃₀)-Y-Aryl(C₆-C₃₀)-alkyl(C₀-C₄))ₓ, wobei x die Bedeutung 1 bis 2 hat und Y eine chemische Bindung, O, S, SO, SO₂, oder NR⁴ bedeutet sowie die Reste R⁴ die Bedeutung Wasserstoff, C₁-C₄-Alkyl oder C₁-C₄-Alkoxy haben, vorzugsweise ein Polyoxyethylen- oder/und Polyoxypropylen-Rest der Formel -O-(C₂-C₃-alkylen-O)ₓ-R⁵, worin R⁵ Wasserstoff, C₁-C₄-Alkyl, Acetyl, Benzoyl oder Naphthoyl bedeutet; eines -O-COR⁶-Restes, wobei R⁶ OH, gesättigtes oder ungesättigtes, verzweigtes oder unverzweigtes, cyclisches oder offenkettiges C₁-C₁₈-Alkyl, teilfluoriertes oder perfluoriertes (C₁-C₁₈)-Alkyl, Phenyl, C₁-C₁₈-Alkyl-phenyl, vorzugsweise Benzyl oder Tolyl;
einen -O-Sulfinyl-Rest (-O-SO₂R⁹), in dem R⁹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, Benzyl,teilfluoriertes oder perfluoriertes Alkyl-(C₁-C₁₈) hat;
einen -O-Silanyl (-O-SiR¹⁰₃)-Rest bedeutet, in dem R¹⁰ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈) hat;
einen -O-Boranyl-Rest (-O-BR¹¹₂) bedeutet, in dem R¹¹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈), O und OH hat;
eines primären (-NH₂), sekundären (-NHR¹²) oder tertiären (-NR¹²₂) Amino-Restes hat, wobei R¹² die Bedeutung Wasserstoff, ein Rest eines C₁-C₃₀-aliphatischen, C₇-C₆₀-araliphatischen oder C₆-C₃₀-aromatischen Kohlenwasserstoffs, der durch ein bis 3 Heteroatome N, O oder/und S unterbrochen sein kann; ein Alkyl(C₁-C₁₈), das perfluoriert oder teilfluoriert ist;
oder das N-Atom des Amino-Restes Bestandteil eines gesättigten oder ungesättigten, aromatischen oder nichtaromatischen 5- bis 7-gliedrigen Ringsystems ist, vorzugsweise das Piperidinyl- oder Pyridinium-Ringsystem, das weitere Heteroatome, bevorzugt Stickstoff, Sauerstoff, Schwefel oder eine Kombination davon, im Ring enthalten kann, insbesondere das Morpholinium-Ringsystem, und
das Chinolinium-Ringsystem;
   oder eines Ammonium-Restes -NR¹²₄⁺ A⁻, wobei A⁻ ein anorganisches oder organisches Anion bedeutet;
   oder einen Azid-Rest-N₃ bedeutet;
und
- X: die Bedeutung -CH₂R¹, -CH₂-NO₂, -COOH, -COO(C₁-C₄)alkyl-CH₂-Hal, wobei Hal Halogen bedeutet, vorzugsweise -CH₂OH, -CH₂OCH₃, -CH₂OCO(C₁-C₄)alkyl,-CH₂-O-SiR₃⁴, -CH₂-O-trityl, -CH₂-SO₂-(C₁-C₄)-alkyl oder -CH₂-SO₂-C₆H₄-(C₁-C₄)-alkyl, hat, als Ladungssteuermittel und Aufladungsverbesserer in triboelektrisch oder elektrokinetisch versprühbaren Pulvern und Pulverlacken und in Elektretmaterialien. Von besonderem Interesse im Sinne der vorliegenden Erfindung sind Verbindungen der Formel (I) worin
- R¹ und R²: unabhängig voneinander die Bedeutung Hydroxy, Methoxy, Ethoxy, Propyloxy, iso- Propyloxy, n-Butyloxy, iso-Butyloxy, tert.-Butyloxy, Vinyloxy, Allyloxy, Phenoxy, Benzyloxy, -O-CF₃, -O-(CH₂CH₂-O)ₓ-R⁵, -O-COR¹³, worin R¹³ ein C₁-C₈-Alkyl, Phenyl oder C₁-C₈-Alkyl-phenyl ist;
oder eine Aminogruppe -NR¹⁴R¹⁵, worin R¹⁴ und R¹⁵ unabhängig voneinander Wasserstoff, Methyl, Ethyl, n-Propyl, iso-Propyl, n-Butyl, iso-Butyl, tert.-Butyl, Allyl, Vinyl, Phenyl, Benzyl oder Tolyl ist oder worin das N-Atom Bestandteil eines Piperidinyl-, Morpholinyl-, Pyridinium- oder Chinolinium-Ringsystems ist;
oder eine Aminogruppe -N^{⊕}HR¹⁴R¹⁵A'^{⊖} , worin A'^{⊖} ein Borat-, Sulfat-, Chlorid-, Bromid-, Nitrat-, Cyanid-, Phosphat-, Carbonat-, Acetat- oder Alkoholat-Anion, und
- X: die Bedeutung -CH₂OH, -CH₂OCH₃, -CH₂Cl, -CH₂Br, -COOH, -COOCH₃, -CH₂-O-C(C₆H₅)₃, -CH₂-O-Si(CH₃)₃, -CH₂-O-SO₂-CH₃ oder -CH₂-O-SO₂-C₆H₄CH₃ hat.

Die ringförmig verknüpften Oligo- und Polysaccharide können aus jeweils gleichen oder unterschiedlichen monomeren Zuckereinheiten bestehen, wobei die Unterschiede in der Konstitution als auch in der Konfiguration bestehen können. Insbesondere können solche monomeren Zuckerbausteine im Oligo-oder Polysaccharid enthalten sein, die zueinander enantiomer oder diastereomer sind.

Bevorzugt im Sinne der vorliegenden Erfindung sind ringförmige Oligo- und Polysaccharide, die aus jeweils gleichen oder enantiomeren Saccharid-Einheiten oder aus Enantiomeren-Mischungen dieser Einheiten (Racemat) bestehen, wobei die Reste R¹, R² und X jeweils gleich sind.

Von Interesse sind Mischungen oder Mischkristalle von verschiedenen ringförmig verknüpften Oligo- oder Polysacchariden sowie Mischungen von verschiedenen ringförmig verknüpften Oligosaccharid-Enantiomeren und Racematen.

Von Interesse sind auch Mischungen oder Mischkristalle von verschiedenen ringförmig verknüpften Oligosacchariden auch in ihrer ionischen Form sowie Mischungen von verschiedenen ringförmig verknüpften Oligosaccharid-Enantiomeren und Racematen.

Besonders bevorzugt im Sinne der vorliegenden Erfindung sind 1,4-verknüpfte Oligoglucoside oder Oligolactoside mit 6 bis 8 monomeren Einheiten, worin R¹ und R² jeweils OH, OCH₃, OC₂H₅, OC₃H₇, O-n-butyl, O-iso-butyl, O-tert.-butyl, O-mesyl oder O-tosyl und X die Bedeutung -CH₂OH, -CH₂OCH₃, -CH₂O-Tosyl oder -CH₂O-mesyl hat.

Cyclisch verknüpfte Oligoglucoside werden in der Literatur als Cyclodextrine bezeichnet. Die Bezeichnung Alpha-, Beta-, Gamma-Cyclodextrin richtet sich nach der Anzahl der ringförmig verknüpften Saccharid-Monomere. Ein ringförmig 1,4-verknüpftes Oligosaccharid, bestehend aus 6 Saccharid-Monomeren (n = 6) wird Alpha-Cyclodextrin, aus 7 Saccharid-Monomeren (n = 7) Beta-Cyclodextrin und aus 8 Saccharid-Monomeren (n = 8) Gamma-Cyclodextrin genannt. Für die höheren Homologen erfolgt die Nomenklatur entsprechend fortlaufend dem griechischen Alphabet. 1,4-verknüpfte Homologe mit n<6 sind nicht bekannt, da aus sterischen Gründen eine Cyclisierung nicht möglich ist.

Von ganz besonderem Interesse sind folgende 1,4-verknüpften Cyclodextrine der Formel (I):
- Verbindung 1:: R¹ und R² sind OH, X ist CH₂OH, n ist 6;
- Verbindung 2:: R¹ und R² sind OH, X ist CH₂OH, n ist 7;
- Verbindung 3:: R¹ und R² sind OH, X ist CH₂OH, n ist 8;
- Verbindung 4:: R¹ und R² sind GH, X ist CH₂-O-SO₂-CH₃, n ist 7;
- Verbindung 5:: R¹ und R² sind OH, X ist CH₂-O-SO₂-C₆H₄CH₃, n ist 7;
- Verbindung 6:: R¹ und R² sind Acetyl, X ist CH₂-OCOCH₃, n ist 7;
- Verbindung 7:: R¹ und R² sind Acetyl, X ist CH₂-OCOCH₃, n ist 6;
- Verbindung 8:: R¹ und R² sind -O-Si(CH₃)₃, X ist CH₂-O-Si(CH₃)₃, n ist 7;
- Verbindung 9:: R¹ und R² sind OH, X ist CH₂-O-C(C₆H₅)₃, n ist 7;
- Verbindung 10:: R¹ und R² sind OCH₃, X ist CH₂-OCH₃, n ist 7;
sowie jeweils ihre Enantiomeren und Mischungen untereinander.

Die Herstellung der ringförmig verknüpften Oligo- und Polysaccharide ist in der Literatur vielfach beschrieben. (Beilstein "Handbuch der Organischen Chemie; Syst. Nr. 3011, 5. Erg. Werk Bd. 19/12; Angew. Chem. 92 (1980) 343, D. French, M.L. Levine, J.H. Pazur, E. Norberg J. Am. Chem. Soc. 71 (1949) 353.) In einer typischen Variante erfolgt die Synthese der ringförmigen Oligosaccharide durch Umsetzung von Stärke mit Kulturen des Bacillus macerans. Aus dem Gemisch können die einzelnen cyclischen Systeme durch fraktionierte Kristallisation oder mit chromatographischen Methoden aufgetrennt werden. Einzelne Derivate sind heute schon kommerziell erhältlich. Sie werden unter der Bezeichnung Alpha-, Beta-, Gamma-Cyclodextrin oder Schardinger-Dextrine vertrieben. Die verschieden substituierten Verbindungen werden typischerweise nach literaturbekannten Vorschriften aus den ringförmigen Oligosacchariden (X = CH₂OH und R¹/R² = OH) durch Derivatisierung mit geeigneten Reagenzien (Angew. Chem. 103 (1991) 94, Angew. Chem. 1994 (106), 851) hergestellt.

Die beschriebenen Derivate wurden nach Methoden hergestellt, die in Chem. Ber. 102 (1969) 494-498, beschrieben sind. Zur Identifikation wurden die Schmelzpunkte bestimmt.

Die erfindungsgemäßen Verbindungen sind farblos und besitzen besonders hohe und konstante Ladungssteuereigenschaften, gute Stabilitäten und sehr gute Dispergierbarkeiten. Ein großer technischer Vorteil dieser sehr gut dispergierbaren Verbindungen liegt darin, daß sie sich gegenüber den unterschiedlichen Bindemittelsystemen inert verhalten und somit vielfältig einsetzbar sind. Sie sind als Ladungssteuermittel und Ladungsverbesserer auch in Pulvern und Lacken, insbesondere Pulverlacken, gut geeignet, insbesondere da sie die Getzeit bei der thermischen Vernetzung der Pulverlacke ("Einbrennen") nicht nachteilig beeinflussen (beschleunigen).

Bei den erfindungsgemäßen Verbindungen sind die hohe Wirksamkeit, die ausgezeichnete Thermostabilität und die allgemeine Harzverträglichkeit von ganz besonderem Vorteil. Für den technischen Einsatz besonders wichtig ist die sehr gute Dispergierbarbeit, so daß insgesamt eine hohe Effizienz erzielt werden kann. Desweiteren sind sie schwermetallfrei und gelten als toxikologisch unbedenklich.

Eine besondere Eigenschaft aller cyclischen Oligomere ist es, Wassermoleküle sowohl zu adsorbieren, als auch in die Cavität des Cyclus einzulagern. Für die Entfernung des entsprechend gebundenen Wassers sind daher unterschiedliche Methoden neben Temperaturerhöhung wie Vakuum (Hochvakuum) und/oder stark wasseradsorbierende physikalisch oder chemisch wirkende Agenzien wie Molsiebe und/oder Perchlorate nötig. Insgesamt ist daher ein breiter Wassergehaltsbereich aufgrund des verschiedenartig gebundenen Wassers nutzbar.

Die erfindungsgemäß eingesetzten ringförmig verknüpften Oligo- und Polysaccharide sind durch folgende chemisch/physikalischen Eigenschaften gekennzeichnet:
1. Der Wasserghalt, nach der Karl-Fischer Methode bestimmt, liegt zwischen 0,001 % und 30 %, bevorzugt zwischen 0,01 und 25 % und besonders bevorzugt zwischen 0,1 und 20 %, wobei das Wasser adsorbiert und/oder gebunden sein kann, und sich dessen Anteil durch Temperatureinwirkung bis 200°C und Vakuum bis 1,33 x 10⁻⁶ Pa (10⁻⁸ Torr) oder durch Wasserzugabe einstellen läßt.
2. Die Teilchengröße, mittels Coulter-Counter-Methode oder Laserlichtbeugung bestimmt und definiert durch den d₅₀-Wert, liegt zwischen 0,01 *µ* m und 3000 *µ*m, bevorzugt zwischen 0,1 und 1000 *µ*m und ganz besonders bevorzugt zwischen 0,5 und 500 *µ*m.
3. Die dielektrischen Eigenschaften, charakterisiert durch:
   a) Durchgangswiderstand, bestimmt bei 1 kHz, zwischen 1 x 10⁷ Ohm x cm und 9 x 10¹⁶ Ohm x cm, bevorzugt zwischen 1 x 10⁸ Ohm x cm und 9 x 10¹⁵ Ohm x cm;
   b) der dielektrische Verlustfaktor tan delta, bestimmt bei 1 kHz, zwischen 9 x 10⁻¹ und 1 x 10⁻³, bevorzugt zwischen 5 x 10⁻¹ und 5 x 10⁻³ und
   c) eine Dielektrizitätszahl epsilon zwischen 1 und 20, bevorzugt zwischen 3 und 15.
4. Die Kristallinität der Verbindungen, bestimmt durch die Röntgenbeugungs-Methode, ist hochkristallin bis teilkristallin oder auch röntgenamorph und
5. Die Thermostabiliät, die mittels Differentialthermoanalyse mit einer konstanten Aufheizgeschwindigkeit von 3K/Min bestimmt wird, ist größer als 200°C.

In Pulverlackbindemitteln läßt sich eine deutliche Aufladbarkeitsverbesserung und die damit einhergehende höhere Abscheidequote erkennen. Während das reine Pulverlackbindemittel so gut wie keine Aufladbarkeit (0,9 - 1.2 *µ*A) und damit einhergehend eine sehr geringe Abscheidequote (28 %) aufweist (Vergleichsbeispiel), läßt sich durch Zugabe von 1 Gew.-% der Verbindung 1 die Aufladbarkeit auf 2,5 - 3,1 µA und die Abscheidequote auf 82 % verbessern (Anwendungsbeispiel 1). Durch die hohe Transparenz des Lacks in aufgeschmolzenem und ausgehärtetem Zustand sind die erfindungsgemäß eingesetzten Verbindungen auch besonders für Pulverlacke geeignet.

Die genannten ringförmigen Oligosaccharide sind auch für den Einsatz in Elektretmaterialien geeignet.

Die erfindungsgemäß verwendeten Verbindungen werden einzeln oder in Kombination miteinander in einer Konzentration von 0,01 bis 50 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Lacks, Pulverlacks, oder Elektretmaterials homogen, beispielsweise durch Extrudieren oder Einkneten, eingearbeitet. Dabei können die erfindungsgemäß eingesetzten Verbindungen als getrocknete und gemahlene Pulver, Dispersionen oder Lösungen, Preßkuchen, Masterbatches, Präparationen, angeteigte Pasten, als auf geeignete Träger, wie z.B. Kieselgel, TiO₂, Al₂O₃, aus wäßriger oder nichtwäßriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensätion.

Gegenstand der vorliegenden Erfindung ist auch ein Pulver oder Pulverlack, enthaltend ein übliches Bindemittel, beispielsweise ein epoxid-, carboxyl- und hydroxylgruppenhaltiges Polyester-oder Acrylharz oder eine Kombination davon und 0,01 bis 50 Gew.-%, vorzugsweise 0,5 bis 20 Gew.-%, besonders bevorzugt 0,1 bis 5 Gew.-%, mindestens eines ringförmig verknüpften Oligo- oder Polysaccharids.

Die Höhe der elektrostatischen Aufladung der Pulverlacke, in welche die erfindungsgemäßen Ladungssteuermittel homogen eingearbeitet werden, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Bei der Bestimmung des q/m-Wertes oder der Triboaufladung von Pulverlacken ist die Teilchengröße von großem Einfluß, weshalb bei den durch Sichtung erhaltenen Toner- oder Pulverlackproben streng auf einheitliche Teilchengrößenverteilung geachtet wird. So ist für Pulverlacke eine mittlere Teilchengröße von 50 *µ*m praktikabel.

Die Triboversprühung der Pulver(lacke) wird mit einem Sprühgerät mit einem Normsprührohr und einer Sterninnenstange bei maximalem Pulverdurchsatz mit einem Sprühdruck von 3 bar durchgeführt. Der zu besprühende Gegenstand wird hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wird anschließend mit einem "Meßgerät" zur Messung von triboelelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebende Stromstärke wird in *µ*A angezeigt. Die Abscheidequote wird anschließend in % durch eine Differenzwiegung aus versprühtem und abgeschiedenem Pulverlack bestimmt.

In den nachstehenden Beispielen bedeuten "Min." "Minuten" und "Std." "Stunden".

### Anwendungsbeispiel 1

In 99 Teile einer Pulverlack-Bindemittelformulierung bestehend aus:

| | |
|---|---|
| Modifiziertes Epoxidharz: | 170 Teile |
| Carboxylterminierter Polyester: | 397 Teile |
| Verlaufsmittel: | 30 Teile |
| Benzoin: | 3 Teile |
| Titandioxid: | 300 Teile |
| Bariumsulfat: | 100 Teile |
| | 1000 Teile |

werden 1 Teil der Verbindung 1 mittels eines Kneters innerhalb von 45 Minuten homogen eingearbeitet.

Zur Bestimmung der Abscheidequote werden 30 g des Test-Pulverlackes mit einem definierten Druck durch eine wie zuvor beschriebene Tribopistole versprüht. Durch Differenzwiegung läßt sich die abgeschiedene Pulverlackmenge bestimmen und eine Abscheidequote in % definieren sowie durch die Ladungsübertragung ein Stromfluß (*µ*A) abgreifen.

| **Druck [bar]** | **Strom [*µ*A]** | **Abscheidequote [%]** |
|---|---|---|
| **3** | **2,5-3,1** | **82** |

### Anwendungsbeispiel 2

1 Teil der Verbindung 2 a wird wie in Anwendungsbeispiel 1 beschrieben eingearbeitet und vermessen.

| Druck [bar] | Strom [*µ*A] | Abscheidequote [%] |
|---|---|---|
| **3** | **2,6 - 3,2** | **65** |

### Anwendungsbeispiel 3

1 Teil der Verbindung 2 a wird eingearbeitet und vermessen.

| Druck [bar] | Strom [*µ*A] | Abscheidequote [%] |
|---|---|---|
| 3 | 2,6-3,1 | 78 |

### Vergleichsbeispiel

Zur Bestimmung der Abscheidequote und des Stroms der reinen Pulverlackbindemittel-Formulierung der Zusammensetzung:

| | |
|---|---|
| Modifiziertes Epoxidharz: | 170 Teile |
| Carboxylterminierter Polyester: | 397 Teile |
| Verlaufsmittel: | 30 Teile |
| Benzoin: | 3 Teile |
| Titandioxid: | 300 Teile |
| Bariumsulfat: | 100 Teile |
| | 1000 Teile |

wird wie in Anwendungsbeispiel 1 verfahren. Die Messung ergibt:

| Druck [bar] | Strom [*µ*A] | Abscheidequote [%] |
|---|---|---|
| 3 | 0,9-1,2 | 28 |

### Charakterisierung der eingesetzten Cyclodextrine

### Verbindung 1

Die Verbindung ist charakterisiert durch:

| | | |
|---|---|---|
| 1. | Wassergehalt [%]: | 8,4 |
| 2. | pH-Wert: | 7 - 7,5 |
| 3. | Leitfähigkeit [µS/cm]: | 20 |
| 4. | Dielektrische Kenndaten: | |
| | a) Durchgangswiderstand [Ohm x cm]: | 2x10¹² |
| | b) Dielektrischer Verlustfaktor: | 5x10⁻² |
| | c) Dielektrizitätszahl: | 5 |
| 5. | Teilchengröße d₅₀ [µm]: | 45 µm (d₉₅ = 180) |
| 6. | Thermostabilität [°C] (Zersetz.): | >240 |
| 7. | Kristallinität: | hochkristallin |

### Verbindung 2 a

Die Verbindung ist charakterisiert durch:

| | | |
|---|---|---|
| 1. | Wassergehalt [%]: | 8 |
| 2. | pH-Wert: | 6,5 - 7,5 |
| 3. | Leitfähigkeit [µS/cm]: | 25 |
| 4. | Dielektrische Kenndaten: | |
| | a) Durchgangswiderstand [Ohm x cm]: | 5x10 ¹¹ |
| | b) Dielektrischer Verlustfaktor: | 4x10 ⁻² |
| | c) Dielektrizitätszahl: | 6 |
| 5. | Teilchengröße d ₅₀ [µm]: | 250 µm (d ₉₅ = 1400) |
| 6. | Thermostabilität [°C] (Zersetz.): | >240 |
| 7. | Kristallinität: | hochkristallin |

In einer besonderen Variante ist die Verbindung 2 b gekennzeichnet durch:

| | | |
|---|---|---|
| 1. | Wassergehalt [%]: | 1,7 |
| 2. | pH-Wert: | 6,5 - 7,5 |
| 3. | Leitfähigkeit [µS/cm]: | 0,8 |
| 4. | Dielektrische Kenndaten: | |
| | a) Durchgangswiderstand [Ohm x cm]: | 1 x 10¹⁰ |
| | b) Dielektrischer Verlustfaktor: | 1 x 10⁻¹ |
| | c) Dielektrizitätszahl: | 9,4 |
| 5. | Teilchengröße d₅₀ [µm]: | 30 µm |
| 6. | Thermostabilität [°C] (Zersetz.): | 340 |
| 7. | Kristallinität: | röntgenamorph |

### Verbindung 3

Die Verbindung ist charakterisiert durch:

| | | |
|---|---|---|
| 1. | Wassergehalt [%]: | 7,6 |
| 2. | pH-Wert: | 6,5 - 7,5 |
| 3. | Leitfähigkeit [µS/cm]: | 29 |
| 4. | Dielektrische Kenndaten: | |
| | a) Durchgangswiderstand [Ohm x cm]: | 4 x 10¹⁰ |
| | b) Dielektrischer Verlustfaktor: | 4 x 10⁻² |
| | c) Dielektrizitätszahl: | 14 |
| 5. | Teilchengröße d₅₀ [µm]: | 180 |
| 6. | Thermostabilität [°C] (Zersetz.): | 272 |
| 7. | Kristallinität: | hochkristallin |

Die Darstellung der Derivate (Verbindungen 4 bis 10) geschieht nach literaturbekannter Vorschrift (Chem. Ber. 102 [1969]). Abweichend von den Vorschriften wurden die Substanzen im Vakuum bei Temperaturen zwischen 20°C und 200°C, vorzugsweise zwischen 50 und 150°C, getrocknet. Zur Identifizierung wurde der literaturbekannte Schmelzpunkt herangezogen und zusätzlich eine Feuchtebestimmung durchgeführt. Die Schmelzpunkte wurden mittels DTA bei einer Aufheizgeschwindigkleit von 3 K/Min. ermittelt (Smp.: Schmelzpunkt, Th.: theoretischer Schmelzpunkt nach Literaturangabe).

| | | |
|---|---|---|
| Verbindung 4: | Smp: 182°C | (Th: 175 - 177°C) |
| | H₂O: 0,87 % | |
| Verbindung 5: | Smp: 171°C | (Th: 170- 172°C) |
| | H₂O: 1,7 % | |
| Verbindung 6: | Smp: 195°C | (Th: 195°C) |
| | H₂O: 2,96 % | |
| Verbindung 7: | Smp: 216 | (Th: 239°C) |
| | H₂O: 8,0 % | |
| Verbindung 8: | Smp: 180°C | (Th: 155°C) |
| | H₂O: 0,92 % | |
| Verbindung 9: | Smp: 156°C | (Th: 155°C) |
| | H₂O: 0,84 % | |
| Verbindung 10: | Smp: 148°C | (Th: 150°C) |
| | H₂O: 0,31 % | |

## Patentansprüche

1. Verwendung von ringförmig verknüpften Oligo- oder Polysacchariden der Formel (I) 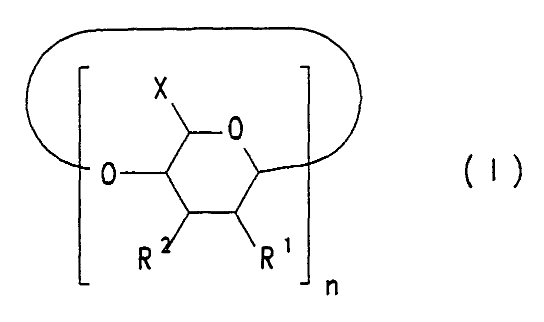 worin
n eine Zahl von 6 bis 80,
R¹ und R² unabhängig voneinander gleich oder verschieden sind und die Bedeutung Hydroxy; verzweigtes oder unverzweigtes, cyclisches oder offenkettiges C₁-C₃₀-Alkoxy; verzweigtes oder unverzweigtes, cyclisches oder offenkettiges C₂-C₃₀-Alkenoxy, wobei die genannten Alkoxy- und Alkenoxy-Reste teilweise oder vollständig fluoriert sein können; unsubstituiertes -O-Aryl(C₆-C₃₀), mit 1 bis 5 C₁-C₃₀-Alkylresten oder C₁-C₃₀-Alkoxyresten substituiertes -O-Aryl(C₆-C₃₀); -O-(C₁-C₄)-Alkyl-(C₆-C₃₀)aryl; -O-(Alkylen(C₀-C₃₀)-Y-Alkyl(C₁-C₃₀))ₓ, -O-(Aryl(C₆-C₃₀)-Y-Aryl(C₆-C₃₀))ₓ, -O-(Aryl(C₆-C₃₀)-Y-Alkyl(C₁-C₃₀))ₓ, -O-(Alkylen(C₀-C₃₀)-Y-Aryl(C₆-C₃₀)-alkyl(C₀-C₄))ₓ, wobei x die Bedeutung 1 bis 2 hat und Y eine chemische Bindung, O, S, SO, SO₂ oder NR⁴ bedeutet sowie die Reste R⁴ die Bedeutung Wasserstoff, C₁-C₄-Alkyl, C₁-C₄-Alkoxy oder Polyoxyethylen oder/und Polyoxypropylen der Formel -O-(C₂-C₃-alkylen-O)ₓ-R⁵, worin R⁵ Wasserstoff,
C₁-C₄-Alkyl, Acetyl, Benzoyl oder Naphthoyl bedeutet; eines -O-COR⁶-Restes, wobei R⁶ OH, gesättigtes oder ungesättigtes, verzweigtes oder unverzweigtes, cyclisches oder offenkettiges C₁-C₁₈-Alkyl, teilfluoriertes oder perfluoriertes (C₁-C₁₈)-Alkyl, Phenyl, C₁-C₁₈-Alkyl-phenyl;
einen -O-SO₂R⁹-Rest, in dem R⁹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, Benzyl, teilfluoriertes oder perfluoriertes Alkyl-(C₁-C₁₈) hat;
einen -O-SiR¹⁰₃-Rest bedeutet, in dem R¹⁰ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈) hat;
einen -O-BR¹¹₂-Rest bedeutet, in dem R¹¹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈), O oder OH hat;
eines primären (-NH₂), sekundären (-NHR¹²) oder tertiären (-NR¹²₂) Amino-Restes hat, wobei R¹² die Bedeutung Wasserstoff, ein Rest eines C₁-C₃₀-aliphatischen, C₇-C₆₀-araliphatischen oder C₆-C₃₀-aromatischen Kohlenwasserstoffs, der durch ein bis 3 Heteroatome N, O oder/und S unterbrochen sein kann oder das N-Atom des Amino-Restes Bestandteil eines gesättigten order ungesättigten, aromatischen oder nichtaromatischen 5- bis 7-gliedrigen Ringsystems ist, das weitere Heteroatome Stickstoff, Sauerstoff, Schwefel oder eine Kombination davon in Ring enthalten kann oder chinolinium bedeutet; ein Alkyl(C₁-C₁₈), das perfluoriert oder teilfluoriert ist; oder eines Ammonium-Restes -NR¹²₄⁺ A⁻, wobei A⁻ ein anorganisches oder organisches Anion bedeutet,
oder eines Azid-Restes -N₃; und
X die Bedeutung -CH₂R¹, -CH₂-NO₂, -CH₂-Hal, wobei Hal Halogen bedeutet, -COOH oder -COO(C₁-C₄)alkyl hat; als Ladungssteuermittel und Aufladungsverbesserer in triboelektrisch oder elektrokinetisch versprühbaren Pulvern und Pulverlacken und in Elektretmaterialien.

2. Verwendung nach Anspruch 1, **dadurch gekennzeichnet, daß**
R¹ und R² unabhängig voneinander die Bedeutung Hydroxy, Methoxy, Ethoxy, Propyloxy, iso- Propyloxy, n-Butyloxy, iso-Butyloxy, tert.-Butyloxy, Vinyloxy, Allyloxy, Phenoxy, Benzyloxy, -O-CF₃, -O-(CH₂CH₂-O)ₓ-R⁵ oder -O-COR¹³ haben, worin R¹³ ein C₁-C₈-Alkyl, Phenyl oder C₁-C₈-Alkyl-phenyl ist;
oder eine Aminogruppe -NR¹⁴R¹⁵, worin R¹⁴ und R¹⁵ unabhängig voneinander Wasserstoff, Methyl, Ethyl, n-Propyl, iso-Propyl, n-Butyl, iso-Butyl, tert.-Butyl, Allyl, Vinyl, Phenyl, Benzyl oder Tolyl sind oder worin das N-Atom Bestandteil eines Piperidinyl-, Morpholinyl-, Pyridinium- oder Chinolinium-Ringsystems ist; oder eine Aminogruppe -N^{⊕}HR¹⁴R¹⁵A'^{⊖} ist, worin A'^{⊖} ein Borat-, Sulfat-, Chlorid-, Bromid-, Nitrat-, Cyanid-, Phosphat-, Carbonat-, Acetat- oder Alkoholat-Anion, und
X die Bedeutung -CH₂OH, -CH₂OCH₃, -CH₂Cl, -CH₂Br, -COOH, -COOCH₃,-CH₂-O-C(C₆H₅)₃, -CH₂-O-Si(CH₃)₃, -CH₂-O-SO₂CH₃ oder -CH₂-O-SO₂-C₆H₄CH₃ hat.

3. Verwendung nach Anspruch 1 oder 2 **dadurch gekennzeichnet, daß** die ringförmig verknüpften Oligo- und Polysaccharide aus jeweils gleichen oder enantiomeren Saccharid-Einheiten oder aus Enantiomeren-Mischungen dieser Einheiten bestehen, in denen die Reste R¹, R² und X jeweils die gleiche Bedeutung haben.

4. Verwendung nach mindestens einem der Ansprüche 1 bis 3, **dadurch gekennzeichnet, daß** die ringförmig verknüpften Oligosaccharide 1,4-verknüpfte Oligoglucoside mit 6 bis 8 monomeren Einheiten sind, worin R¹ und R² jeweils OH, OCH₃, OC₂H₅, OC₃H₇, O-n-butyl, O-iso-butyl, O-tert-butyl, O-mesyl oder O-tosyl sind und X die Bedeutung -CH₂OH, -CH₂OCH₃, -CH₂O-tosyl oder -CH₂O-mesyl hat.

5. Verwendung nach Anspruch 4, **dadurch gekennzeichnet, daß** R¹ und R² jeweils OH ist, X die Bedeutung CH₂OH hat und die Anzahl der ringförmig verknüpften Glucose-Einheiten 6, 7 oder 8 ist.

6. Pulver oder Pulverlack, enthaltend ein epoxid-, carboxyl- oder hydroxylgruppenhaltiges Polyester- oder Acrylharz oder eine Kombination daraus und 0,01 bis 50 Gew.-%, bezogen auf die Gesamtmischung, mindestens eines des in einem oder mehreren der Ansprüche 1 bis 5 beschriebenen ringförmig verknüpften Oligo- oder Polysaccharids.

7. Pulver oder Pulverlack nach Anspruch 6, enthaltend 0,1 bis 5 Gew.-%, bezogen auf die Gesamtmischung, mindestens eines ringförmig verknüpften Oligo- oder Polysaccharids.

8. Verfahren zur Herstellung eines Pulvers oder Pulverlacks nach Anspruch 6 oder 7, **dadurch gekennzeichnet, daß** das ringförmig verknüpfte Oligo- oder Polysaccharid als getrocknetes und gemahlenes Pulvers, Dispersion oder Lösung, Preßkuchen, Masterbatch, Präparation, angeteigte Paste oder als auf einem geeigneten Träger aus wäßriger oder nichtwäßriger Lösung aufgezogene Verbindung zugegeben wird; oder schon bei der Herstellung des jeweiligen Bindemittels zugegeben wird.

## Claims

1. The use of a cyclically linked oligo- or polysaccharide of the formula (I) 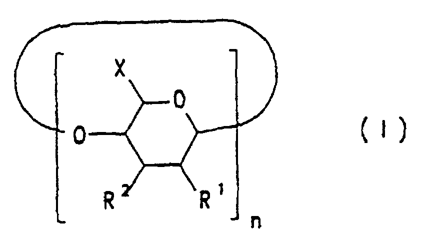 in which
n is a number from 6 to 80,
R¹ and R² independently of one another are identical or different and are hydroxyl; branched or unbranched, cyclic or open-chain C₁-C₃₀-alkoxy; branched or unbranched, cyclic or open-chain C₂-C₃₀-alkenoxy, where the alkoxy and alkenoxy radicals mentioned can be partly or completely fluorinated; unsubstituted -O-aryl(C₆-C₃₀), or -O-aryl (C₆-C₃₀) which is substituted by 1 to 5 C₁-C₃₀-alkyl radicals or C₁-C₃₀-alkoxy radicals; -O-(C₁-C₄)-alkyl-(C₆-C₃₀)aryl; -O-(alkylene (C₀-C₃₀)-Y-alkyl(C₁-C₃₀))ₓ, -O-(aryl(C₆-C₃₀)-Y-aryl(C₆-C₃₀))ₓ, -O-(aryl(C₆-C₃₀)-Y-alkyl(C₁-C₃₀))ₓ or -O-(alkylene(C₀-C₃₀)-Y-aryl(C₆-C₃₀)-alkyl(C₀-C₄))ₓ, where x is 1 to 2, and Y is a chemical bond, O, S, SO, SO₂ or NR⁴, and the radicals R⁴ are hydrogen, C₁-C₄-alkyl, C₁-C₄-alkoxy or polyoxyethylene and/or polyoxypropylene of the formula -O-(C₂-C₃-alkylene-O)ₓ-R⁵, in which R⁵ is hydrogen, C₁-C₄-alkyl, acetyl, benzoyl or naphthoyl; a -O-COR⁶ radical, in which R⁶ is OH, saturated or unsaturated, branched or unbranched, cyclic or open-chain C₁-C₁₈-alkyl, partly fluorinated or perfluorinated (C₁-C₁₈)-alkyl, phenyl or C₁-C₁₈-alkyl-phenyl; an -O-SO₂R⁹ radical, in which R⁹ is methyl, ethyl, propyl, butyl, vinyl, allyl, isopropyl, isobutyl, neopentyl, tert-butyl, cyclohexyl, cyclopentyl, phenyl, tolyl, benzyl, partly fluorinated or perfluorinated alkyl-(C₁-C₁₈); an -O-SiR¹⁰₃ radical, in which R¹⁰ is methyl, ethyl, propyl, butyl, vinyl, allyl, isopropyl, isobutyl, neopentyl, tert-butyl, cyclohexyl, cyclopentyl, phenyl, tolyl, partly fluorinated or perfluorinated alkyl (C₁-C₁₈); an -O-BR¹¹₂ radical, in which R¹¹ is methyl, ethyl, propyl, butyl, vinyl, allyl, isopropyl, isobutyl, neopentyl, tert-butyl, cyclohexyl, cyclopentyl, phenyl, tolyl, partly fluorinated or perfluorinated alkyl (C₁-C₁₈), O or OH; a primary (-NH₂), secondary (-NHR¹²) or tertiary (-NR¹²₂) amino radical, in which R¹² is hydrogen, or a radical of a C₁-C₃₀-aliphatic, C₇-C₆₀-araliphatic or C₆-C₃₀-aromatic hydrocarbon, which can be interrupted by one to 3 hetero atoms N, O and/or S; or the N atom of the amino radical is a constituent of a saturated or unsaturated, aromatic or non-aromatic 5- to 7-membered ring system, which can contain the further hetero atoms, nitrogen, oxygen, sulfur or a combination thereof in the ring, or is quinolinium; an alkyl (C₁-C₁₈), or which is perfluorinated or partly fluorinated; or an ammonium radical -NR¹²₄⁺A⁻, in which A⁻ is an inorganic or organic anion; or an azide radical -N₃; and
X is -CH₂R¹, -CH₂-NO₂ or -CH₂-Hal, in which Hal is halogen, is -COOH or -COO(C₁-C₄)-alkyl; as a charge control agent and charging improver in a powder or powder coating which can be sprayed triboelectrically or electrokinetically or in an electret material.

2. The use as claimed in claim 1, wherein
R¹ and R² independently of one another are hydroxyl, methoxy, ethoxy, propyloxy, iso-propyloxy, n-butyloxy, iso-butyloxy, tert-butyloxy, vinyloxy, allyloxy, phenoxy, benzyloxy, -O-CF₃, -O-(CH₂CH₂-O)ₓ-R⁵ or -O-COR¹³, in which R¹³ is a C₁-C₈-alkyl, phenyl or C₁-C₈-alkyl-phenyl; or an amino group -NR¹⁴R¹⁵, in which R¹⁴ and R¹⁵ independently of one another are hydrogen, methyl, ethyl, n-propyl, isopropyl, n-butyl, iso-butyl, tert-butyl, allyl, vinyl, phenyl, benzyl or tolyl, or in which the N atom is a constituent of a piperidinyl, morpholinyl, pyridinium or quinolinium ring system;
or an amino group -N^{⊕}HR¹⁴R¹⁵A'^{θ}, in which A'^{θ} is a borate, sulfate, chloride, bromide, nitrate, cyanide, phosphate, carbonate, acetate or alcoholate anion and
X is -CH₂OH, -CH₂OCH₃, -CH₂Cl, -CH₂Br, -COOH, -COOCH₃, -CH₂-O-C(C₆H₅)₃, -CH₂-O-Si(CH₃)₃, -CH₂-O-SO₂CH₃ or -CH₂-O-SO₂-C₆H₄CH₃.

3. The use as claimed in claim 1 or 2, wherein the cyclically linked oligo- or polysaccharide comprises in each case identical or enantiomeric saccharide units or an enantiomer mixture of these units, in which the radicals R¹, R² and X in each case have the same meaning.

4. The use as claimed in at least one of claims 1 to 3, wherein the cyclically linked oligosaccharide is a 1,4-linked oligoglucoside having 6 to 8 monomeric units, in which R¹ and R² are in each case OH, OCH₃, OC₂H₅, OC₃H₇, O-n-butyl, O-iso-butyl, O-tert-butyl, O-mesyl or O-tosyl and X is -CH₂OH, -CH₂OCH₃, -CH₂O-tosyl or -CH₂O-mesyl.

5. The use as claimed in claim 4, wherein R¹ and R² are each OH, X is CH₂OH and the number cyclically linked of glucose units is 6, 7 or 8.

6. A powder or powder coating comprising a polyester or acrylic resin containing epoxide, carboxyl or hydroxyl groups or a combination thereof and 0.01 to 50% by weight, based on the total mixture, of at least one cyclically linked oligo- or polysaccharide as claimed in one or more of claims 1 to 5.

7. A powder or powder coating as claimed in claim 6, comprising 0.1 to 5% by weight, based on the total mixture, of at least one cyclically linked oligo- or polysaccharide.

8. A process for the preparation of a powder or powder coating as claimed in claim 6 or 7, which comprises adding the cyclically linked oligo- or polysaccharide as a dried and ground powder, dispersion or solution, press-cake, masterbatch, preparation or mixed paste, or as a compound adsorbed onto a suitable carrier from an aqueous or non-aqueous solution, or already adding it during preparation of the particular binder.

## Revendications

1. Utilisation d'oligo- ou de polysaccharides cycliques couplés de formule (I) 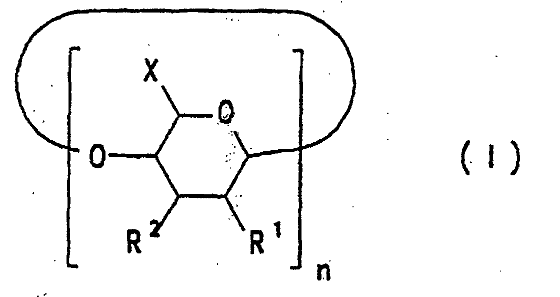 dans laquelle
n est un nombre de 6 à 80,
R¹ et R² sont indépendamment l'un de l'autre identiques ou différents et représentent un groupe hydroxy ; alcoxy en C₁-C₃₀ cyclique ou à chaîne ouverte, ramifié ou non ramifié ; alcènoxy en C₂-C₃₀ ramifié ou non ramifié, cyclique ou à chaîne ouverte, les groupes alcoxy et alcènoxy cités pouvant être partiellement ou totalement fluorés ; -O-(aryle en C₆-C₃₀) non substitué, -O-(aryle en C₆-C₃₀) substitué par de 1 à 5 groupes alkyle en C₁-C₃₀ ou groupes alcoxy en C₁-C₃₀ ; -O-alkyle en (C₁-C₄)-aryle en C₆-C₃₀ ; -O-(alkylène en C₀-C₃₀)-Y-(alkyle en C₁-C₃₀))ₓ, -O-(aryle en C₆-C₃₀)-Y-(aryle en C₆-C₃₀))ₓ, -O-[(aryle en C₆-C₃₀)-Y-(alkyle en C₁-C₃₀))ₓ, -O-(alkylène en C₀-C₃₀)-Y-(aryle en C₆-C₃₀)-(alkyle en C₀-C₄))ₓ, dans lesquelles x représente 1 à 2 et Y une liaison chimique, O, S, SO, SO₂ ou NR⁴ et les groupes R⁴ ont la signification d'un atome d'hydrogène, d'un groupe alkyle en C₁-C₄, alcoxy en C₁-C₄ ou polyoxyéthylène et/ou polyoxypropylène de formule -O-(alkylène en C₂-C₃)-O)ₓ-R⁵, dans laquelle R⁵ représente un atome d'hydrogène, un groupe alkyle en C₁-C₄, acétyle, benzoyle ou naphtoyle ; un groupe -O-COR⁶, dans lequel R⁶ représente OH, un groupe alkyle en C₁-C₁₈ saturé ou insaturé, ramifié ou non ramifié, cyclique ou à chaîne ouverte, un groupe alkyle en C₁-C₁₈ partiellement fluoré ou perfluoré, phényle, alkyle en C₁-C₁₈-phényle ;
un groupe -O-SO₂R⁹, dans lequel R⁹ représente un groupe méthyle, éthyle, propyle, butyle, vinyle, allyle, isopropyle, isobutyle, néopentyle, tert.-butyle, cyclohexyle, cyclopentyle, phényle, tolyle, benzyle, alkyle en C₁-C₁₈ partiellement fluoré ou perfluoré ;
représente un groupe -O-SiR¹⁰₃, dans lequel R¹⁰ a la signification d'un groupe méthyle, éthyle, propyle, butyle, vinyle, allyle, isopropyle, isobutyle, néopentyle, tert. -butyle, cyclohexyle, cyclopentyle, phényle, tolyle, benzyle, alkyle en C₁-C₁₈ partiellement fluoré ou perfluoré ;
représente un groupe -O-BR¹¹₂, dans lequel R¹¹ a la signification d'un groupe méthyle, éthyle, propyle, butyle, vinyle, allyle, isopropyle, isobutyle, néopentyle, tert. -butyle, cyclohexyle, cyclopentyle, phényle, tolyle, alkyle en C₁-C₁₈ partiellement fluoré ou perfluoré, O ou OH ;
représente un groupe amine primaire (-NH₂), secondaire (-NHR¹²) ou tertiaire (-NR¹²₂), R¹² ayant la signification d'un atome d'hydrogène, d'un reste d'un hydrocarbure aliphatique en C₁-C₃₀, araliphatique en C₇-C₆₀ ou aromatique en C₆-C₃₀, qui peut être interrompu par un à 3 hétéroatomes N, O S et/ou ou l'atome d'azote du groupe amine est un constituant du résidu amino d'une combinaison cyclique saturée ou insaturée, aromatique ou non aromatique à 5 à 7 chaînons, qui peut contenir d'autres hétéroatomes azote, oxygène, soufre ou une combinaison de ceux-ci dans le cycle ou représente le quinolinium ; un groupe alkyle en C₁-C₁₈, qui est perfluoré ou partiellement fluoré ; ou un groupe ammonium
-NR¹²₄⁺ A⁻, dans lequel A⁻ représente un anion inorganique ou organique,
ou un groupe azide -N₃ ; et
X a la signification -CH₂R¹, -CH₂-NO₂, -CH₂-Hal, dans laquelle Hal représente un halogène, -COOH ou -COO-alkyle en C₁-C₄ ;
comme agent de contrôle de charge et agent d'amélioration de la charge dans les poudres pulvérisables par effet triboélectrique ou électrocinétique et les laques en poudre et dans les matériaux d'électrets.

2. Utilisation selon la revendication 1, **caractérisée en ce que**, R¹ et R² ont indépendamment l'un de l'autre la signification hydroxy, méthoxy, éthoxy, propyloxy, isopropyloxy, n-butyloxy, iso-butyloxy, tert.-butyloxy, vinyloxy, allyloxy, phénoxy, benzyloxy, -O-CF₃-, -O-(CH₂CH₂-O)ₓ-R⁵ ou -O-COR¹³, dans lesquels R¹³ est un groupe alkyle en C₁-C₈, phényle ou alkyle en C₁-C₈-phényle ; ou un groupe amine -NR¹⁴R¹⁵, dans lequel R¹⁴ et R¹⁵ sont indépendamment l'un de l'autre un atome d'hydrogène, un groupe méthyle, éthyle, n-propyle, iso-propyle, n-butyle, iso-butyle, tert.-butyle, allyle, vinyle, phényle, benzyle ou tolyle ou dans lequel l'atome d'azote est un constituant d'une combinaison cyclique pipéridinyle, morpholinyle, pyridinium ou quinolinium ;
ou est un groupe amine -N^{⊕}HR¹⁴R¹⁵A'^{⊖}, dans lequel A'^{⊖} est un anion borate, sulfate, chlorure, bromure, nitrate, cyanure, phosphate, carbonate, acétate ou alcoolate, et X a la signification -CH₂OH, -CH₂OCH₃, -CH₂Cl, -CH₂Br, -COOH, -COOCH₃, -CH₂-O-C(C₆H₅)₃, -CH₂-O-Si(CH₃)₃, -CH₂-O-SO₂CH₃ ou -CH₂-O-SO₂-C₆H₄CH₃.

3. Utilisation selon la revendication 1 ou 2, **caractérisée en ce que** les oligo- et polysaccharides cycliques couplés sont constitués de motifs saccharide respectivement identiques ou énantiomères ou de mélanges d'énantiomères de ces motifs, dans lesquels les groupes R¹, R² et X ont respectivement des significations identiques.

4. Utilisation selon au moins une des revendications 1 à 3, **caractérisée en ce que** les oligosaccharides cycliques couplés sont des oligoglucosides couplés en 1,4 ayant de 6 à 8 motifs monomères, dans lesquels R¹ et R² sont respectivement OH, OCH₃, OC₂H₅, OC₃H₇, O-n-butyle, O-iso-butyle, O-tert.-butyle, O-mésyle ou O-tosyle et X a la signification -CH₂OH, -CH₂OCH₃, -CH₂O-tosyle ou -CH₂O-mésyle.

5. Utilisation selon la revendication 4, **caractérisée en ce que** R¹ et R² sont respectivement OH, X a la signification CH₂OH et le nombre des motifs cycliques couplés de glucose est de 6, 7 ou 8.

6. Poudre ou laque en poudre, contenant une résine polyester ou acrylique contenant des groupes époxyde, carboxyle ou hydroxyle ou une combinaison de ceux-ci et de 0,01 à 50% en poids, par rapport au mélange global, d'au moins un de l'oligo- ou polysaccharide cyclique couplé décrit dans une ou plusieurs des revendications 1 à 5.

7. Poudre ou laque en poudre selon la revendication 6, contenant de 0,1 à 5% en poids; par rapport au mélange global, d'au moins un oligo- ou polysaccharide cyclique couplé.

8. Procédé pour la fabrication d'une poudre ou d'une laque en poudre selon la revendication 6 ou 7, **caractérisé en ce que** l'oligo- ou polysaccharide cyclique couplé est ajouté sous la forme d'une poudre séchée et broyée, d'une solution ou d'une dispersion, d'un gâteau de filtre presse, d'un lot maitre, d'une préparation, d'une pâte après reprise ou sous la forme d'un composé absorbé sur un véhicule approprié de solution aqueuse ou non aqueuse ; ou est déjà ajouté lors de la préparation du liant respectif.
